# EUROPEAN PATENT APPLICATION

(11) **EP 2 261 907 A1**
(43) Date of publication of application: **15.12.2010**
(21) Application number: 10165224.6
(22) Date of filing: 08.06.2010
(51) Int. Cl.: G11B 19/02, G06F 21/00

(54) **Content distributing system and recording and reproducing apparatus**

(30) Priority: 09.06.2009 JP 2009137777
(71) Applicant: Funai Electric Co., Ltd., Daito-shi, Osaka 574-0013 (JP)
(72) Inventor: Kimotsuki, Kenji, Daito-shi Osaka 574-0013 (JP)
(74) Representative: Grünecker, Kinkeldey, Stockmair & Schwanhäusser Anwaltssozietät

(57) **Abstract**

Disclosed is a content distributing system comprising recording and reproducing apparatuses to record and reproduce content, the apparatuses connected to one another through a network to be able to mutually transmit and receive the content, wherein a distribution destination recording and reproducing apparatus includes a request section to request distribution of content from a distribution source recording and reproducing apparatus; the distribution source recording and reproducing apparatus includes: a producing section to produce use restricting information including reproduction information and/or transfer information when distribution of the content is requested by the request section, and a transmission section to transmit the content requested to be distributed together with the use restricting information; and the distribution destination recording and reproducing apparatus further includes a content using section to use the content based on the use restricting information transmitted from the distribution source recording and reproducing apparatus.

## Description

### BACKGROUND OF THE INVENTION

### Field of the Invention

The present invention relates to a content distributing system in which a plurality of recording and reproducing apparatus connected to one another through a network mutually transmits and receives content, and the recording and reproducing apparatus.

### Description of Related Art

In recent years, it has become possible to mutually distribute various kinds of content, such as an image, a document, and software, among terminals, such as personal computers (PCs), mutually connected through a network by using a peer-to-peer system or the like, and the exchanges of content are frequently performed between users.

Because a terminal, such as a PC, is, however, required to perform complicated network transmission setting and the like beforehand in order to exchange the content, it is sometimes hard for a user who is not well aware of the operations of the terminal to handle the terminal.

Consequently, it is thinkable that the convenience of a user is still more improved if the content can mutually be transmitted and received with existing audio visual (AV) equipment, such as a recorder, which can be easily handled without complicated setting.

Accordingly a reproduction device is known, which includes a reproduction section to reproduce content and a wireless communication section to perform communication with another device existing in a communication range. The reproduction device identifies a usable content item from another device and makes the identified content item usable as long as the other device is communicating with the reproduction device (see, for example, Published Japanese Translation of a PCT Application No. 2008-546070).

By the invention described in Published Japanese Translation of a PCT Application No. 2008-546070, however, the reproduction device, obtaining content from the other device, cannot sense what restriction of use exists in the content, and the situation in which the user of the reproduction device happens to infringe copyright can be produced.

### SUMMARY OF THE INVENTION

It is an object of the present invention to provide a content distributing system capable of transmitting and receiving content between mutual recording and reproducing apparatus and of setting the restriction of use to the content to be distributed, and the recording and reproducing apparatus.

According to a first aspect of the present invention, there is provided a content distributing system comprising a plurality of recording and reproducing apparatus to record and reproduce content, the recording and reproducing apparatus connected to one another through a network to be able to mutually transmit and receive the content held by each of the recording and reproducing apparatus through the network, wherein
a distribution destination recording and reproducing apparatus, which is a distribution destination of the content, includes a request section to request distribution of content from a distribution source recording and reproducing apparatus of a distribution source of the content;
the distribution source recording and reproducing apparatus includes:
a producing section to produce use restricting information including reproduction information pertaining to the number of reproducible times of content by the distribution destination recording and reproducing apparatus and/or transfer information pertaining to the number of transferable times of the content to another recording and reproducing apparatus, when distribution of the content is requested by the request section, and
a transmission section to transmit the content requested to be distributed to the distribution destination recording and reproducing apparatus together with the use restricting information produced by the producing section; and
the distribution destination recording and reproducing apparatus further includes a content using section to use the content based on the use restricting information transmitted from the distribution source recording and reproducing apparatus.

According to a second aspect of the present invention, there is provided a recording and reproducing apparatus to record and reproduce content, the apparatus being connected to a network, comprising:
a content storing section to store content;
a reception section to accept a distribution request of the content stored in the content storing section from another recording and reproducing apparatus through the network;
a producing section to produce use restricting information including reproduction information pertaining to the number of reproducible times of the content by a given recording and reproducing apparatus and/or transfer information pertaining to the number of transferable times of the content to a recording and reproducing apparatus other than the given recording and reproducing apparatus when the reception section accepts the distribution request of the content; and
a transmission section to transmit the content requested to be distributed to another recording and reproducing apparatus together with the use restricting information produced by the producing section.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a diagram for describing the schematic configuration of a content distributing system according to the present invention;
FIG. 2 is a block diagram showing the configuration of the principal part of the content distributing system according to the present invention;
FIG. 3 is a diagram schematically showing a content information list screen according to the present invention;
FIG. 4 is a flow chart for describing the content distribution processing by the content distributing system according to the present invention;
FIG. 5 is a flow chart for describing the content distribution processing by the content distributing system according to the present invention; and
FIG. 6 is a flow chart for describing the content distribution processing by the content distributing system according to the present invention.

### DESCRIPTION OF THE PREFERRED EMBODIMENTS

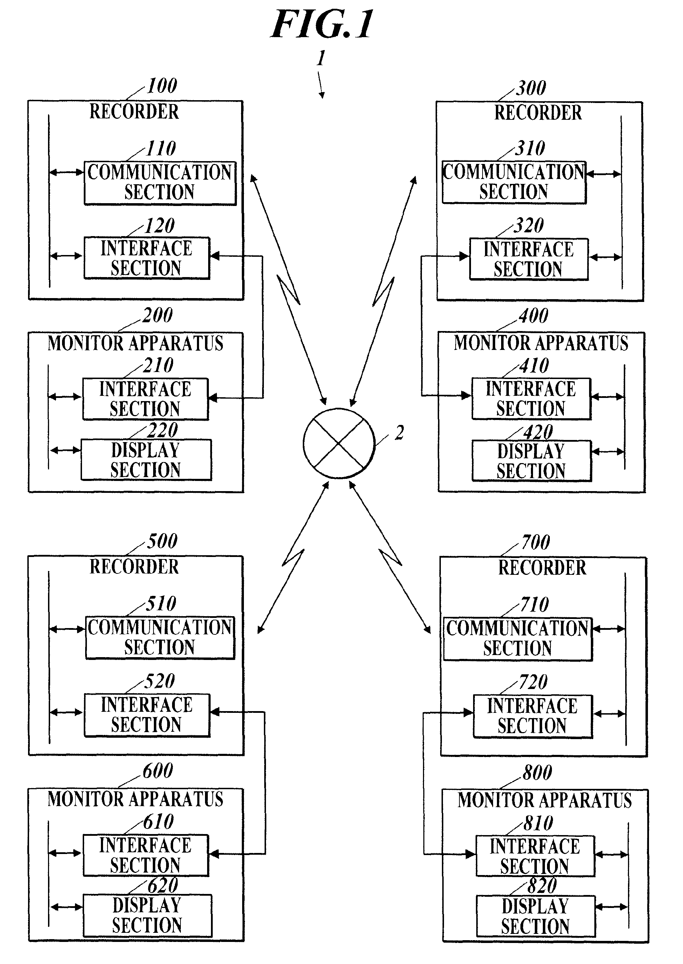

In the following, a content distributing system according to the present invention will be described with reference to FIGS. 1-3. In addition, the scope of the invention is not restricted to the shown examples.

A content distributing system 1 is configured in such a way that, for example, a plurality of recorders 100, 300, 500, and 700, each recording and reproducing content, is mutually connected through a network 2 with communication sections 110, 310, 510, and 710, respectively, to be able to mutually transmit and receive (distribute) the content held by each of the recorders 100, 300, 500, and 700 through the network 2.

Furthermore, the recorders 100, 300, 500, and 700 are connected to interface sections 210, 410, 610, and 810, respectively, of monitor apparatus 200, 400, 600, and 800, respectively, each capable of outputting images/sounds, through interface sections 120, 320, 520, and 720, respectively, and content information pertaining to the content to be distributed can be ascertained on display sections 220, 420, 620, and 820.

The content to be distributed in the content distributing system 1 is, for example, images, software, and document/music files here, and the content chiefly covers the content that is voluntarily produced by the owners of the respective recorders 100, 300, 500, and 700, the content the copyright of which was resigned, the content the protection period of which has elapsed, and the like.

The network 2 is composed of, for example, a communications network for the Internet for performing mutual communication of transmission and reception of information by the plurality of recorders 100, 300, 500, and 700.

Next, the recorders 100, 300, 500, and 700 will be described. Each of the recorders 100, 300, 500, and 700 is the one functioning as a distribution source and a distribution destination of content independently (distribution source recording and reproducing apparatus, distribution destination recording and reproducing apparatus) here, and has the same configuration. Accordingly, the configuration of the recorder 100 will be described as an example in the following.

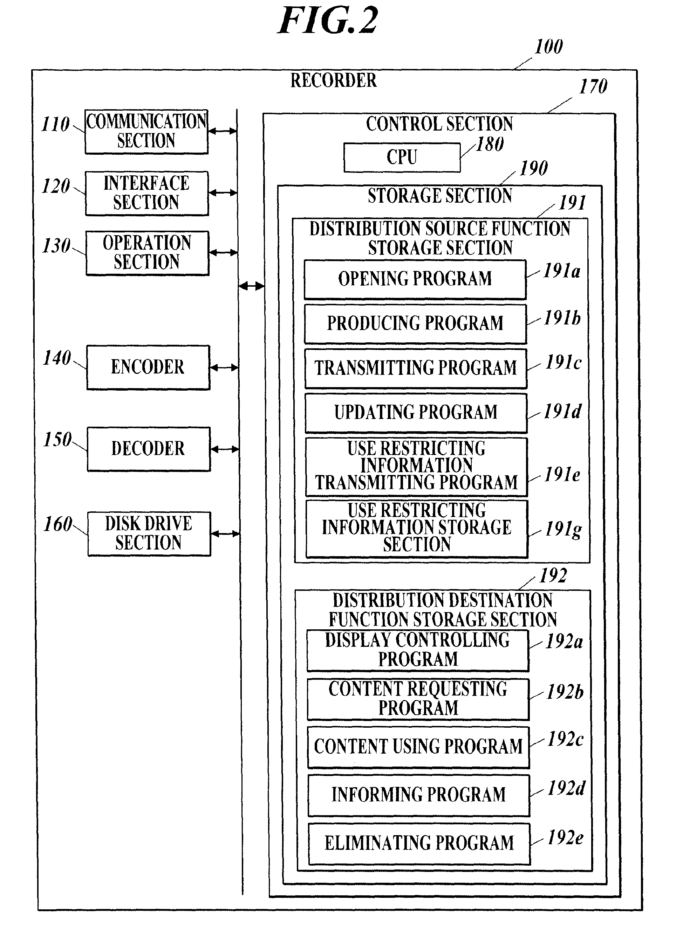

The recorder 100 is, as shown in FIG. 2, a hard disk recorder composed of, for example, the communication section 110 (reception section), the interface section 120, an operation section 130 (request section, content selecting section), an encoder 140, a decoder 150, a disk drive section 160 (content storing section), and a control section 170.

The communication section 110 is, for example, a communication interface for Internet connection, and enables the mutual transmission and reception of data with the other recorders 300, 500, and 700 through the network 2.

Furthermore, the communication section 110 receives (accepts) the information of a distribution request of content, stored in the disk drive section 160, from the other recorders 300, 500, and 700 through the network 2.

The interface section 120 is equipped with a plurality of AV terminals, such as a composite terminal, a D terminal, and a high-definition multimedia interface (HDMI) terminal, to connect the recorder 100 to external AV equipment, such as the monitor apparatus 200, through cables corresponding to the respective AV terminals. Then, the recorder 100 is enabled to input and output content and data against external AV equipment by the interface section 120.

The operation section 130 is composed of, for example, operation buttons/an operation panel, provided on the housing surface of the recorder 100, a remote controller (not shown) for the remote control of the recorder 100, and a reception section (not shown) capable of receiving an operation signal transmitted from the remote controller. Then, the recorder 100 is configured in such a way that, when a user operates the operation buttons/operation panel of the operation section 130, various operation signals corresponding to the operation is output to the control section 170, and various kinds of processing corresponding to the operation signal are executed by the control section 170.

Furthermore, the user can designate the number of times of permitting the reproduction of content to be distributed to another recorder and the number of times of the transfer of the content with the operation section 130 when a central processing unit (CPU) 180, which will be described later, executes a producing program 191b.

Furthermore, the user can select the content to be obtained from another recorder on the basis of the content information of each piece of content, displayed on the display section 220 of the monitor apparatus 200 by the execution of a display controlling program 192a of the CPU 180, which will be described later, with the operation section 130.

The decoder 150 performs decoding processing to the content, for example, recorded (stored) in the disk drive section 160, and outputs the decoded content to external AV equipment, such as the monitor apparatus 200, through the interface section 120 to perform the reproduction of the own content, and the like.

The encoder 140 performs the predetermined encoding processing to, for example, the content obtained through the interface section 120 to record the encoded content into the disk drive section 160.

The disk drive section 160 is composed of, for example, a magnetic recording medium, such as a hard disk drive (HDD), and an optical recording medium, and records the content obtained from external AV equipment through the interface section 120 and television broadcasting data received through a not shown antenna/a tuner.

The control section 170 is composed of, for example, the CPU 180 and a storage section 190 to perform the integrated control of each component provided in the recorder 100.

The CPU 180 executes, for example, various programs stored in the storage section 190 in accordance with input signals input from each section of the recorder 100, and integrally controls the whole operation of the recorder 100 by outputting output signals to each section on the basis of the executed programs.

The storage section 190 is composed of, for example, an erasable programmable read only memory (EPROM), and includes an area storing the programs to be executed by the CPU 180 and an area storing various kinds of data required to execute the programs. For example, the storage section 190 includes a distribution source function storage section 191, a distribution destination function storage section 192, and the like.

The distribution source function storage section 191 is a storage region storing the programs and the data required when the recorder 100 functions as a distribution source of its own holding content, and is configured to include, for example, an opening program 191a (opening section), the producing program 191b (producing section), a transmitting program 191c (transmission section), an updating program 191d (update section, flag update section), a use restricting information transmitting program 191e, and a use restricting information storage section 191g (storage section).

It is supposed here for the following descriptions of the programs stored in the distribution source function storage section 191 that the recorder 100 is the recorder of a content distribution source; the recorder 300 is the recorder of a content distribution destination; and the recorder 500 is the recorder of a content transfer destination.

The opening program 191a is a program enabling the CPU 180 to execute the function of opening the content information pertaining to its own holding each piece of content to the other recorders 300, 500, and 700 through the network 2.

To put it concretely, when a user selects a piece of content stored in the disk drive section 160 to be distributed to the other recorders 300, 500, and 700 through the operation section 130, the CPU 180 executes the opening program 191a to generate the content information composed of the title of the selected content, the kind of the content (such as, an image, a document, music, and software), the capacity of the content, the identifier of the recorder distributing the content (namely, the recorder 100), and the like to open the content information to the other recorders 300, 500, and 700 on a predetermined Web site through a Web server (not shown) connected to the network 2.

In addition, the content information may be the information enabling a user to add, for example, the outline of content, the distributable period of content, special instructions, and the like to the items generated by the execution of the opening program 191a by the CPU 180 with the operation section 130.

The producing program 191b is a program enabling the CPU 180 to execute the function of producing the use restricting information including the reproduction information pertaining to the number of reproducible times of the content by the recorder 300, the content distribution destination, and/or the transfer information pertaining to the number of transferable times of the content to another recorder when the recorder 100 is requested to distribute the content from the recorder 300.

To put it concretely, when a distribution request of a piece of content held by the recorder 100 is informed from the recorder 300 on the basis of the content information opened by the execution of the opening program 191a by the CPU 180, the CPU 180 executes the producing program 191b to allow a user to designate the number of times of the reproduction of the content to be permitted to the recorder 300 and the number of times of the transfer of the content to the recorder 500 and the like to be permitted to the recorder 300 with the operation section 130. Then, the CPU 180 obtains reproduction information and the transfer information on the basis of the designated the numbers of times, and produces use restricting information by adding an elimination flag for enabling the recorder 300 to eliminate the content and the identifier of the content to the reproduction information and the transfer information, and stores the produced use restricting information into the use restricting information storage section 191g, which will be described later.

The transmitting program 191c is a program enabling the CPU 180 to execute the function of transmitting the content requested to be distributed from the recorder 300, which is the content distribution destination, to the recorder 300 together with the use restricting information produced by the execution of the producing program 191b.

To put it concretely, when the CPU 180 executes the producing program 191b to produce the use restricting information and the produced use restricting information is stored in the use restricting information storage section 191g, the CPU 180 executes the transmitting program 191c to obtain the use restricting information corresponding to the content requested to be distributed by the recorder 300 from the use restricting information storage section 191g on the basis of the identifier of the content and to transmit the content as well as the obtained used restricting information to the recorder 300 through the communication section 110. In addition, the use restricting information is described in, for example, the header file of the content at the time of the transmission.

The updating program 191d is a program enabling the CPU 180 to execute the function of updating the use restricting information stored in the use restricting information storage section 191g on the basis of the information of the reproduction or the transfer of content from the recorder 300, which is the content distribution destination, at the time of the information.

To put it concretely, every time of receiving the information of the reproduction or the transfer of content from the recorder 300, which has obtained the content by the execution of the transmitting program 191c by the CPU 180, through the communication section 110, the CPU 180 executes the processing of executing the updating program 191d to obtain use restricting information from the use restricting information storage section 191g on the basis of the identifier of the content, and of subtracting one from the number of reproducible times of the reproduction information or the number of transferable times of the transfer information, and the CPU 180 updates the use restricting information in the use restricting information storage section 191g. Furthermore, when the number of reproducible times and the number of transferable times become zero as the result of the update, the CPU 180 performs the processing of turning on the elimination flag.

The updated use restricting information transmitting program 191e is a program enabling the CPU 180 to execute the function of transmitting the use restricting information, updated by the execution of the updating program 191d, to the recorder 300, which is the content distribution destination.

To put it concretely, when the CPU 180 executes the updating program 191d to update the use restricting information, the CPU 180 executes the updated use restricting information transmitting program 191e to transmit the updated use restricting information to the recorder 300 through the communication section 110.

The use restricting information storage section 191g stores the use restricting information produced by the execution of the producing program 191b by the CPU 180. Furthermore, the use restricting information is sequentially updated by the execution of the updating program 191d by the CPU 180.

The distribution destination function storage section 192 is the storage region storing programs and data necessary for the recorder 100 when the recorder 100 functions as a distribution destination of the content of the other recorders 300, 500, and 700, and is configured to include, for example, the display controlling program 192a (request section, display control section), a content requesting program 192b (request section), a content using program 192c (content using section), an informing program 192d (information section), and an eliminating program 192e (eliminating section).

It is supposed here for describing the following programs stored in the distribution destination function storage section 192 that the recorder 700 is a content distribution source; the recorder 100 is a content distribution destination; and the recorder 500 is a content transfer destination.

The display controlling program 192a is a program enabling the CPU 180 to execute the function of outputting each piece of the content information opened by the recorder 700, which is a content distribution source, or the like to the monitor apparatus 200 to display the content information on the display section 220 as a list.

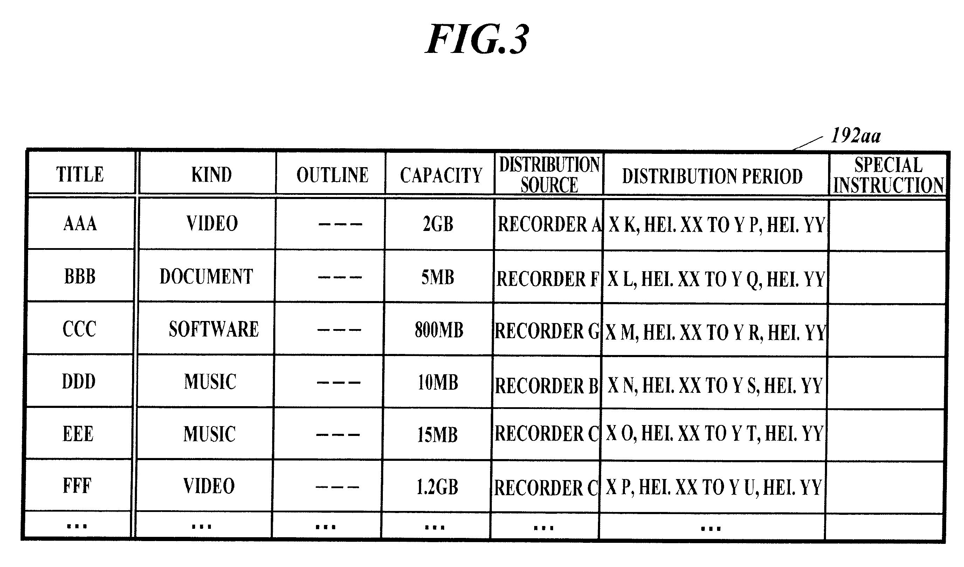

To put it concretely, it becomes possible to peruse the content information of each piece of content posted on predetermined Web sites by the recorder 700 and the like as a content information list screen 192aa on a display section 500 in the format, for example, shown in FIG. 3 by the execution of the display controlling program 192a by the CPU 180.

The content requesting program 192b is a program enabling the CPU 180 to execute the function of requesting the distribution of the content selected by the user with the operation section 130.

To put it concretely, when the CPU 180 executes the display controlling program 192a to display the content information list screen 192aa and a user selects a piece of content, which the user desires to obtain, with the operation section 130 on the basis of the displayed content information, then the CPU 180 executes the content requesting program 192b to perform the information of requesting the distribution of the content to the recorder 700, which is the distribution source, through the communication section 110 on the basis of the identifier of the recorder included in the content information of the selected content.

The content using program 192c is a program enabling the CPU 180 to execute the function of using content on the basis of the use restricting information transmitted from the recorder 700, which is the content distribution source.

To put it concretely, when the content requested to be distributed and the use restricting information of the content are transmitted from the recorder 700 by the execution of the content requesting program 192b by the CPU 180, the disk drive section 160 stores the content and the use restricting information. Then, if the CPU 180 performs the reproduction or the transfer of the content, the CPU 180 executes the content using program 192c to execute the use restricting processing of the content on the basis of the reproduction information and the transfer information included in the use restricting information. Namely, for example, if the number of reproducible times of the reproduction information is one or more and the number of transferable times of the transfer information zero, the CPU 180 executes reproduction processing when the user performs the operation for reproducing the content with the operation section 130, but the CPU 180 does not execute any transfer processing even if the user performs the operation for transferring the content to the recorder 500 with the operation section 130.

If the updated use restricting information is transmitted from the recorder 700 here, the CPU 180 updates the use restricting information of the disk drive section 160 on the basis of the identifier of the content included in the use restricting information, and executes the use restricting processing of the content on the basis of the use restricting information after the update.

The informing program 192d is a program enabling the CPU 180 to execute the function of informing the recorder 700 of reproduction or transfer at the time of reproducing the content transmitted from the recorder 700, which is the content distribution source, or transferring the content to the recorder 500 or the like.

To put it concretely, every time of the reproduction of the content transmitted from the recorder 700 or the transfer of the content to the recorder 500 or the like in the state in which the use restricting processing of the content has been executed by the execution of the content using program 192c by the CPU 180, the CPU 180 executes the informing program 192d to inform the recorder 700 of the reproduction of the content or the transfer thereof through the communication section 110.

The eliminating program 192e is a program enabling the CPU 180 to execute the function of eliminating the content corresponding to the updated use restricting information transmitted from the recorder 700, which is the content distribution source, when the elimination flag of the updated use restricting information is on.

To put it concretely, when the updated use restricting information is transmitted from the recorder 700 and the CPU 180 identifies the on/off state of the elimination flag included in the use restricting information and the elimination flag is on, the CPU 180 executes the eliminating program 192e to eliminate the content stored in the disk drive section 160 on the basis of the identifier of the content included in the use restricting information.

### (Content Distribution Processing)

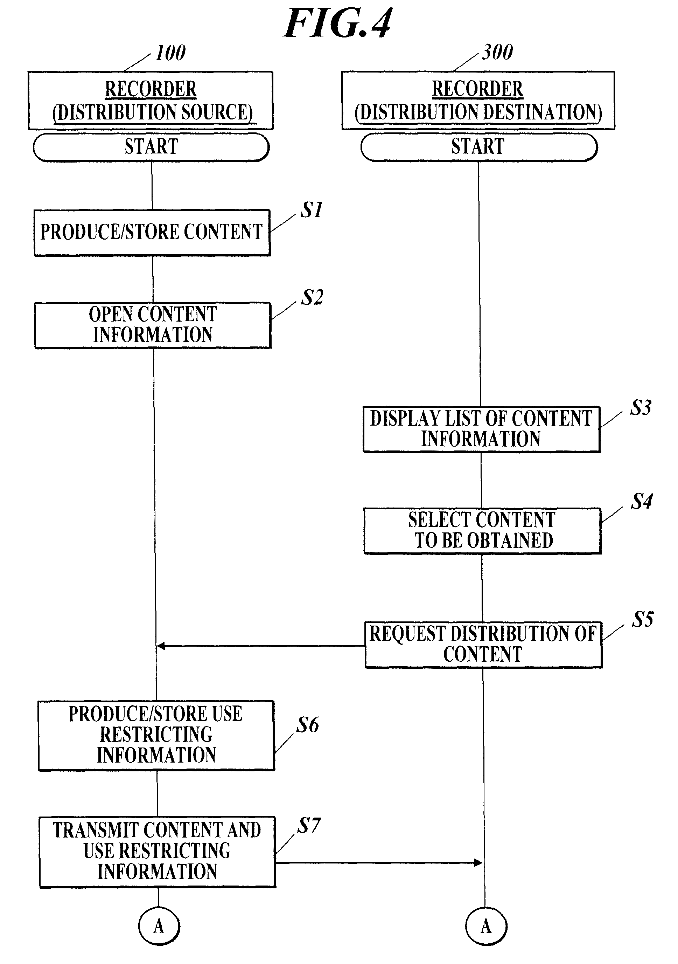

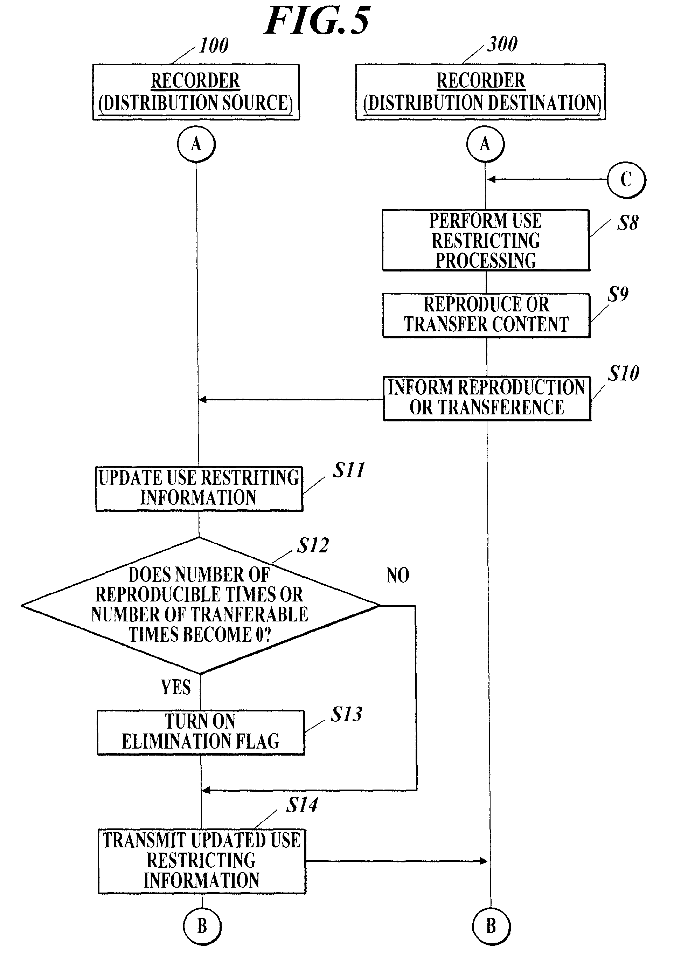

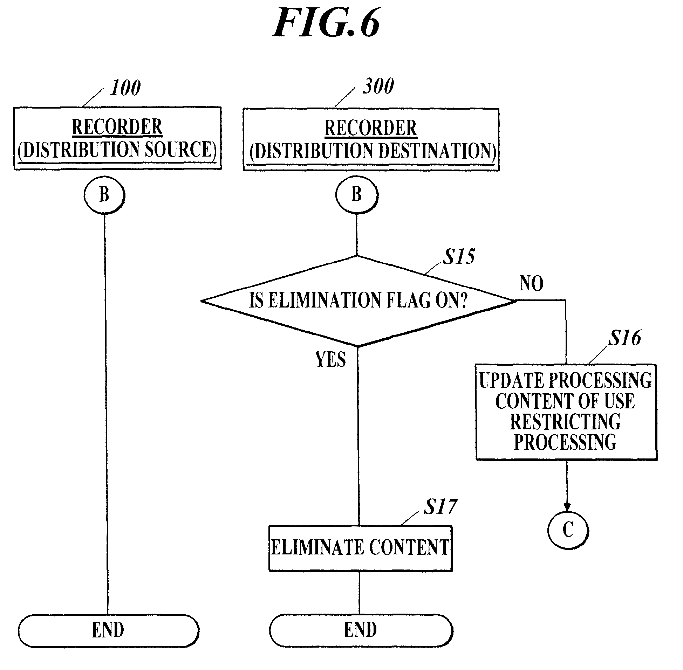

Next, the flow of the content distribution processing performed in the content distributing system 1 will be described with reference to the flow charts of FIGS. 4-6.

It is supposed in the following description of the content distribution processing here that the recorder 100 is a content distribution source; the recorder 300 is a content distribution destination; and the recorder 500 is a content transfer destination. In addition, because the recorders 100 and 300 have the same configuration as described above, an operation section 330, a CPU 380, a display controlling program 392a, a content requesting program 392b, a content using program 392c, an information program 392d, and an eliminating program 392e, each provided in the recorder 300 and described below, are the same as the operation section 130, the CPU 180, the display controlling program 192a, the content requesting program 192b, the content using program 192c, the informing program 192d, and the eliminating program 192e, respectively, each provided in the recorder 100.

First, a user of the recorder 100 inputs content produced in external AV equipment (such as a PC, a digital camera, and a digital video) or the like with the interface section 120, and the content is stored in the disk drive section 160 (Step S1).

Next, the CPU 180 of the recorder 100 executes the opening program 191a to open the content information of the content produced at Step S1 to the other recorders 300, 500, and 700 through the network 2 (Step S2).

Next, the CPU 380 of the recorder 300 executes the display controlling program 392a to output the content information opened at Step S2 and the content information opened by the other recorders to the monitor apparatus 400. The CPU 380 thereby makes the display section 420 display the content information as a list (Step S3).

Next, the user of the recorder 300 selects a piece of the content to be obtained in the list displayed at Step S3 by operating the operation section 330 (Step S4). In addition, it is supposed that the user selects the content stored in the recorder 100 at Step S1.

Next, the CPU 380 executes the content requesting program 392b to request the distribution of the content selected by the user at Step S4 from the recorder 100 (Step S5).

Next, when the distribution of the content is requested at Step S5, the CPU 180 executes the producing program 191b to allow the user of the recorder 100 to designate the number of reproducible times of the content and the number of transferable times to the other recorders with the operation section 130 to generate use restricting information, and the CPU 180 makes the use restricting information storage section 191g store the use restriction information (Step S6).

Next, the CPU 180 executes the transmitting program 191c to transmit the content requested to be distributed at Step S5 to the recorder 300 together with the use restricting information produced at Step S6 (Step S7).

Next, the CPU 380 executes the content using program 392c to execute the use restricting processing of the content on the basis of the reproduction information and the transfer information of the use restricting information transmitted at Step S7 (Step S8).

Next, the user of the recorder 300 reproduces the content transmitted at Step S7 or transfers the content to the recorder 500 under the restriction of use carried out at Step S8 (Step S9).

Next, the CPU 380 executes the information program 392d to inform the recorder 100 of the reproduction or the transfer of the content at Step S9 (Step S11).

Next, the CPU 180 executes the updating program 191d to update the use restricting information stored in the use restricting information storage section 191g on the basis of the information at Step S10 (Step S11).

Next, the CPU 180 judges whether the number of reproducible times and the number of transferable times become zero or not as the result of updating the use restricting information at Step S11 (Step S12).

Then, when the CPU 180 judges that the number of reproducible times and the number of transferable times do not become zero at Step S12 (Step S12: No), the CPU 180 advances the processing to that at Step S14.

On the other hand, when the CPU 180 judges that the number of reproducible times and the number of transferable times become zero at Step S12 (Step S12: Yes), the CPU 180 executes the processing of turning on the elimination flag of the use restricting information (Step S13).

Next, the CPU 180 executes the updated use restricting information transmitting program 191e to transmit the use restricting information updated at Step S11 or S13 to the recorder 300 (Step S14).

Next, the CPU 380 judges whether the elimination flag of the use restricting information transmitted at Step S14 is on or not (Step S15).

Then, when the CPU 380 judges that the elimination flag is off (Step S15: No), the CPU 380 executes the content using program 392c to update the processing content of the use restricting processing on the basis of the use restricting information transmitted at Step S14 (Step S16), and repeats the processing on and after Step S8.

On the other hand, when the CPU 380 judges that the elimination flag is on (Step S15: Yes), the CPU 380 executes the eliminating program 392e to eliminate the content corresponding to the use restricting information (Step S17).

As described above, the content distributing system 1 of the present embodiment is configured in such a way that the plurality of recorders 100, 300, 500, and 700, each recording and reproducing content, is connected to one another through the network 2 to be able to mutually transmit and receive the content held by each of the recorders 100, 300, 500, and 700 through the network 2. The recorder 300 as the distribution destination of content is equipped with the content requesting program 392b enabling the CPU 380 to execute the function of requesting the distribution of content from the recorder 100 as the distribution source of the content. The recorder 100 is equipped with the producing program 191b enabling the CPU 180 to execute the function of producing use restricting information including reproduction information pertaining to the number of reproducible times of content by the recorder 300 and/or transfer information pertaining to the number of transferable times of the content to another recording and reproducing apparatus when the recorder 100 is requested to distribute the content by the execution of the content requesting program 392b by the CPU 380, and the transmitting program 191c enabling the CPU 180 to execute the function of transmitting the content requested to be distributed to the recorder 300 together with the use restricting information produce by the execution of the producing program 191b by the CPU 180. The recorder 300 is equipped with the content using program 392c enabling the CPU 380 to execute the function of using the content on the basis of the use restricting information transmitted from the recorder 100.

Namely, because the content distributing system 1 is configured in such a way that the CPU 180 of the recorder 100 executes the transmitting program 191c to transmit the content requested to be distributed by the recorder 300 as well as the use restricting information of the content to the recorder 300, and that the CPU 380 of the recorder 300 executes the content using program 392c to perform the use restricting processing of the content on the basis of the use restricting information, the content distributing system 1 can set the restriction of use to the content to be distributed.

Hence it can be said that the present invention pertains the content distributing system capable of transmitting and receiving content between recording and reproducing apparatus and of setting the restriction of use of the content to be distributed, and the recording and reproducing apparatus.

Furthermore, the recorder 100 is equipped with the opening program 191a enabling the CPU 180 to execute the function of opening the content information pertaining to its own holding each piece of content to the other recorders 300, 500, and 700, and the like through the network 2. The recorder 300 is connected to the monitor apparatus 400 displaying input information on the display section 420 thereof. The recorder 300 is equipped with the display controlling program 392a enabling the CPU 380 to execute the function of displaying a list of each piece of content information opened by the execution of the opening program 191a of the CPU 180 on the display section 420 by outputting the content information to the monitor apparatus 400, and the operation section 330 to select the content to be obtained from the recorder 100 on the basis of the content information displayed by the execution of the display controlling program 392a by the CPU 380. The content requesting program 392b enables the CPU 380 to execute the function of requesting the distribution of the content selected by a user with the operation section 330.

Namely, the user of the recorder 300, which is the distribution destination of content, can ascertain the content information pertaining to the content to be obtained as a list on the display section 420 in advance, and then can select the content to be requested to be distributed to the recorder of the distribution source. The situation in which a piece of content is judged to be unnecessary after the content has been distributed and the content is eliminated without being used can thus be prevented beforehand.

Furthermore, the recorder 300 is equipped with the information program 392d enabling the CPU 380 to execute the function of informing the recorder 100 of the reproduction of content or the transfer thereof when a user reproduces the content or transfers the content to the recorder 500 in the state in which the use restricting processing has been performed by the execution of the content using program 392c by the CPU 380. The recorder 100 is equipped with the disk drive section 160 to store the use restricting information produced by the execution of the producing program 191b by the CPU 180, the updating program 191d enabling the CPU 180 to execute the function of updating the use restricting information stored in the disk drive section 160 on the basis of information informing reproduction or transfer when the information is informed by the execution of the information program 392b by the CPU 380, and the updated use restricting information transmitting program 191e enabling the CPU 180 to execute the function of transmitting use restricting information updated by the execution of the updating program 191d by the CPU 180 to the recorder 300.

Namely, because the recorder 100 is configured to be informed of the reproduction or the transfer every reproduction or transfer of content distributed to the recorder 300 by a user and to update the use restricting information on the basis of the information and transmit the updated use restricting information to the recorder 300, the content of the use restricting processing preformed of the content by the execution of the content using program 392c by the CPU 380 can also be updated sequentially. Consequently, the form of the use of the content to be distributed can be grasped by the distribution source of the content, and the setting of the use restricting processing by the distribution destination of the content can also be updated sequentially. Consequently, it can be said that the management of the content to be distributed can accurately be performed.

Furthermore, use restricting information includes an elimination flag for eliminating the content. The updating program 191d of the recorder 100 enables the CPU 180 to execute the function of turning on the elimination flag when the number of reproducible times of reproduction information and the number of transferable times of transfer information become zero. The recorder 300 is equipped with the eliminating program 392e enabling the CPU 380 to execute the function of eliminating the content corresponding to the updated use restricting information transmitted by the execution of the updated use restricting information transmitting program 391e by the CPU 380 when the elimination flag of the updated user restricting information is on.

Namely, it can be said that the management of the content to be distributed can be still more accurately performed because the distribution source of the content can instruct the distribution destination of the content to eliminate the content when both of the number of reproducible times of the use restricting information and the number of updatable times become zero.

In addition, the present invention is not restricted to the embodiment described above, and the changes of the design can suitably be performed in the range without departing from the scope and the spirit of the present invention.

For example, although the embodiment described above is configured to update the use restricting information in the recorder 100, which is the content distribution source, every use of the content by the recorder 300, which is the content distribution destination, the update may be configured to be performed by executing the updating program 391d by the recorder 300 (content distribution destination). In this case, the transmitting program 191c is executed in the recorder 100, and the restriction of use of content and elimination processing of the content are all performed in the recorder 300 after the content and use restricting information are once transmitted to the recorder 300. Consequently, even if the recorder 100 and the recorder 300 become the state in which they cannot be connected to each other through the network 2, the management of content can continuously be performed.

According to an aspect of the preferred embodiment of the present invention, there is provided a content distributing system comprising a plurality of recording and reproducing apparatus to record and reproduce content, the recording and reproducing apparatus connected to one another through a network to be able to mutually transmit and receive the content held by each of the recording and reproducing apparatus through the network, wherein
a distribution destination recording and reproducing apparatus, which is a distribution destination of the content, includes a request section to request distribution of content from a distribution source recording and reproducing apparatus of a distribution source of the content;
the distribution source recording and reproducing apparatus includes:
a producing section to produce use restricting information including reproduction information pertaining to the number of reproducible times of content by the distribution destination recording and reproducing apparatus and/or transfer information pertaining to the number of transferable times of the content to another recording and reproducing apparatus, when distribution of the content is requested by the request section, and
a transmission section to transmit the content requested to be distributed to the distribution destination recording and reproducing apparatus together with the use restricting information produced by the producing section; and
the distribution destination recording and reproducing apparatus further includes a content using section to use the content based on the use restricting information transmitted from the distribution source recording and reproducing apparatus.

Preferably, the distribution source recording and reproducing apparatus further includes an opening section to open content information pertaining to each content held on its own to another recording and reproducing apparatus through the network;
the distribution destination recording and reproducing apparatus is connected to a display apparatus to display input information on a predetermined display section;
the request section includes a display control section to output the respective pieces of content information opened by the opening section to the display apparatus so as to display a list of the content information on the display section, and
a content selecting section to select content to be obtained from the distribution source recording and reproducing apparatus based on the content information displayed by the display control section; wherein
the request section requests distribution of the content selected by the content selecting section.

Preferably, the distribution destination recording and reproducing apparatus further includes an information section to inform the distribution source recording and reproducing apparatus of reproduction or transfer when the content using section reproduces the content or transfers the content to another recording and reproducing apparatus;
the distribution source recording and reproducing apparatus further includes:
a storage section to store the use restricting information produced by the producing section;
an update section to update the use restricting information stored in the storage section based on information when the reproduction or the transfer is informed by the information section; and
an updated use restricting information transmitting section to transmit the use restricting information updated by the update section to the distribution destination recording and reproducing apparatus.

Preferably, the use restricting information includes an elimination flag to eliminate the content;
the update section of the distribution source recording and reproducing apparatus includes a flag update section to turn on the elimination flag when the number of reproducible times of the reproduction information and the number of transferable times of the transfer information become zero; and
the distribution destination recording and reproducing apparatus further includes an eliminating section to eliminate the content corresponding to the use restricting information when the elimination flag of the updated use restricting information transmitted by the updated use restricting information transmitting section is turned on.

According to another aspect of the preferred embodiment of the present invention, there is provided a recording and reproducing apparatus to record and reproduce content, the apparatus being connected to a network, comprising:
a content storing section to store content;
a reception section to accept a distribution request of the content stored in the content storing section from another recording and reproducing apparatus through the network;
a producing section to produce use restricting information including reproduction information pertaining to the number of reproducible times of the content by a given recording and reproducing apparatus and/or transfer information pertaining to the number of transferable times of the content to a recording and reproducing apparatus other than the given recording and reproducing apparatus when the reception section accepts the distribution request of the content; and
a transmission section to transmit the content requested to be distributed to another recording and reproducing apparatus together with the use restricting information produced by the producing section.

According to the present invention, a plurality of recording and reproducing apparatuses are mutually connected to each other so that each content held therein may be transmitted and received to and from each other. Further, the distribution source recording and reproducing apparatus transmits the use restricting information of the content produced in the producing section together with the content to the distribution destination recording and reproducing apparatus by the transmission section. Furthermore, the distribution destination recording and reproducing apparatus uses the content by the content using section, based on the use restricting information.

Hence it can be said that the present invention pertains the content distributing system capable of transmitting and receiving content between recording and reproducing apparatus and of setting the restriction of use of the content to be distributed.

The entire disclosure of Japanese Patent Application No. 2009-137777 filed on June 9, 2009 including description, claims, drawings, and abstract are incorporated herein by reference in its entirety.

Although various exemplary embodiments have been shown and described, the invention is not limited to the embodiments shown. Therefore, the scope of the invention is intended to be limited solely by the scope of the claims that follow.

## Claims

1. A content distributing system comprising a plurality of recording and reproducing apparatus to record and reproduce content, the recording and reproducing apparatus connected to one another through a network to be able to mutually transmit and receive the content held by each of the recording and reproducing apparatus through the network, wherein
a distribution destination recording and reproducing apparatus, which is a distribution destination of the content, includes a request section to request distribution of content from a distribution source recording and reproducing apparatus of a distribution source of the content;
the distribution source recording and reproducing apparatus includes:
a producing section to produce use restricting information including reproduction information pertaining to the number of reproducible times of content by the distribution destination recording and reproducing apparatus and/or transfer information pertaining to the number of transferable times of the content to another recording and reproducing apparatus, when distribution of the content is requested by the request section, and
a transmission section to transmit the content requested to be distributed to the distribution destination recording and reproducing apparatus together with the use restricting information produced by the producing section; and
the distribution destination recording and reproducing apparatus further includes a content using section to use the content based on the use restricting information transmitted from the distribution source recording and reproducing apparatus.

2. The content distributing system according to claim 1, wherein
the distribution source recording and reproducing apparatus further includes an opening section to open content information pertaining to each content held on its own to another recording and reproducing apparatus through the network;
the distribution destination recording and reproducing apparatus is connected to a display apparatus to display input information on a predetermined display section;
the request section includes a display control section to output the respective pieces of content information opened by the opening section to the display apparatus so as to display a list of the content information on the display section, and
a content selecting section to select content to be obtained from the distribution source recording and reproducing apparatus based on the content information displayed by the display control section; wherein
the request section requests distribution of the content selected by the content selecting section.

3. The content distributing system according to claim 1 or 2, wherein
the distribution destination recording and reproducing apparatus further includes an information section to inform the distribution source recording and reproducing apparatus of reproduction or transfer when the content using section reproduces the content or transfers the content to another recording and reproducing apparatus;
the distribution source recording and reproducing apparatus further includes:
a storage section to store the use restricting information produced by the producing section;
an update section to update the use restricting information stored in the storage section based on information when the reproduction or the transfer is informed by the information section; and
an updated use restricting information transmitting section to transmit the use restricting information updated by the update section to the distribution destination recording and reproducing apparatus.

4. The content distributing system according to claim 3, wherein
the use restricting information includes an elimination flag to eliminate the content;
the update section of the distribution source recording and reproducing apparatus includes a flag update section to turn on the elimination flag when the number of reproducible times of the reproduction information and the number of transferable times of the transfer information become zero; and
the distribution destination recording and reproducing apparatus further includes an eliminating section to eliminate the content corresponding to the use restricting information when the elimination flag of the updated use restricting information transmitted by the updated use restricting information transmitting section is turned on.

5. A recording and reproducing apparatus to record and reproduce content, the apparatus being connected to a network, comprising:
a content storing section to store content;
a reception section to accept a distribution request of the content stored in the content storing section from another recording and reproducing apparatus through the network;
a producing section to produce use restricting information including reproduction information pertaining to the number of reproducible times of the content by a given recording and reproducing apparatus and/or transfer information pertaining to the number of transferable times of the content to a recording and reproducing apparatus other than the given recording and reproducing apparatus when the reception section accepts the distribution request of the content; and
a transmission section to transmit the content requested to be distributed to another recording and reproducing apparatus together with the use restricting information produced by the producing section.
